# EUROPEAN PATENT APPLICATION

(11) **EP 4 793 519 A1**
(43) Date of publication of application: **19.08.2026**
(21) Application number: 26156451.2
(22) Date of filing: 04.02.2026
(51) Int. Cl.: F16D 55/40, F16D 59/02, F16D 65/18, F16D 65/54

(54) **BRAKING ASSEMBLY FOR A WORK VEHICLE**

(30) Priority: 17.02.2025 IT 202500003015
(71) Applicant: CNH Industrial Italia S.p.A., 10156 Torino (IT)
(72) Inventor: Pellizzari, Piero, 10156 Turin (IT); Forte, Michelantonio, 10156 Turin (IT)
(74) Representative: CNH Industrial IP Department

(57) **Abstract**

A braking assembly (10; 10'; 10") for a work vehicle (1; 1'; 1") comprising a first brake disc (9; 8), which is adapted to rotate integrally with at least one wheel of the work vehicle (1; 1'; 1'') about a rotational axis (A), a first brake piston (53; 53') and a second brake piston (54; 54'), which are both adapted to independently and at least indirectly cooperate with the first brake disc (9; 8) and elastic means (55), which are adapted to elastically urge the second brake piston (54; 54') to cooperate with the first brake disc (9; 8). The elastic means (55) is arranged radially internally relative to the second brake piston (54; 54') with respect to the rotational axis (A).

## Description

### TECHNICAL FIELD

The present invention concerns a braking assembly for a work vehicle, preferably an agricultural vehicle, such as a tractor. The present invention also relates to a work vehicle comprising such a braking assembly.

### BACKGROUND OF THE INVENTION

Agricultural vehicles are known comprising a main body and plurality of wheels adapted to rotate about respective rotational axes so as move the main body with respect to the ground.

The agricultural vehicles further comprise a service braking system, which is adapted to slow down, stop or prevent the rotation of the wheels about their respective rotational axes while the vehicles are moving, and a parking and/or emergency braking system, which is specifically adapted to keep the vehicles securely motionless when parked or in emergency conditions.

As is well known, various braking technologies have been developed over time and, in particular, some agricultural vehicles usually employ one or more disc brakes as service brakes and one or more SAHR (Spring Activated Hydraulic Release) brakes as parking brakes.

The disc brakes generally comprise at least one brake disc, which is rotatable integrally with one or more wheels, and brake pads, which are adapted to be pressed against the brake disc in order to generate friction and, consequently, a braking action.

The SAHR brake generally comprises a friction member, which is spring biased against an abutment element. A hydraulic circuit of the work vehicle is adapted to oppose the biasing of the friction member during the vehicle movement to disengage the friction member. In detail, the SAHR brake is arranged upstream the bevel set gear of the work vehicle.

The arrangement of the disc brakes and the SAHR brake in the know work vehicles is cumbersome and severely limits the space available in the vehicle and the design freedom. Therefore, the need is felt to reduce the volume occupied by components used for vehicle braking while increasing the performance and reliability of the SAHR brake.

An aim of the present invention is to satisfy the above-mentioned need in a cost-effective and optimized manner.

### SUMMARY OF THE INVENTION

The aforementioned aim is reached by a braking assembly, as claimed in the appended independent claim.

Preferred embodiments of the invention are realized according to the claims dependent or related to the above independent claim.

### BRIEF DESCRIPTION OF DRAWINGS

For a better understanding of the present invention, three preferred embodiments are described in the following, by way of non-limiting examples, with reference to the attached drawings wherein:
- Figure 1 is a cross-section of a braking assembly of an agricultural vehicle according to a first embodiment of the present invention;
- Figures 2 and 3 are further cross-sections of the braking assembly of Figure 1 along respective different section planes and on an enlarged scale;
- Figure 4 is another cross-section of the braking assembly of Figures 1 to 3 showing a clearance recovery device and with parts removed for clarity;
- Figure 5 is a perspective view of a component of the braking assembly of Figures 1 to 4;
- Figure 6 is a cross-section of a braking assembly of an agricultural vehicle according to a second embodiment of the present invention;
- Figure 7 is a cross-section of a braking assembly of an agricultural vehicle according to a third embodiment of the present invention; and
- Figure 8 is a detail view of the braking assembly of Figure 7 with parts removed for clarity.

### DETAILED DESCRIPTION OF THE INVENTION

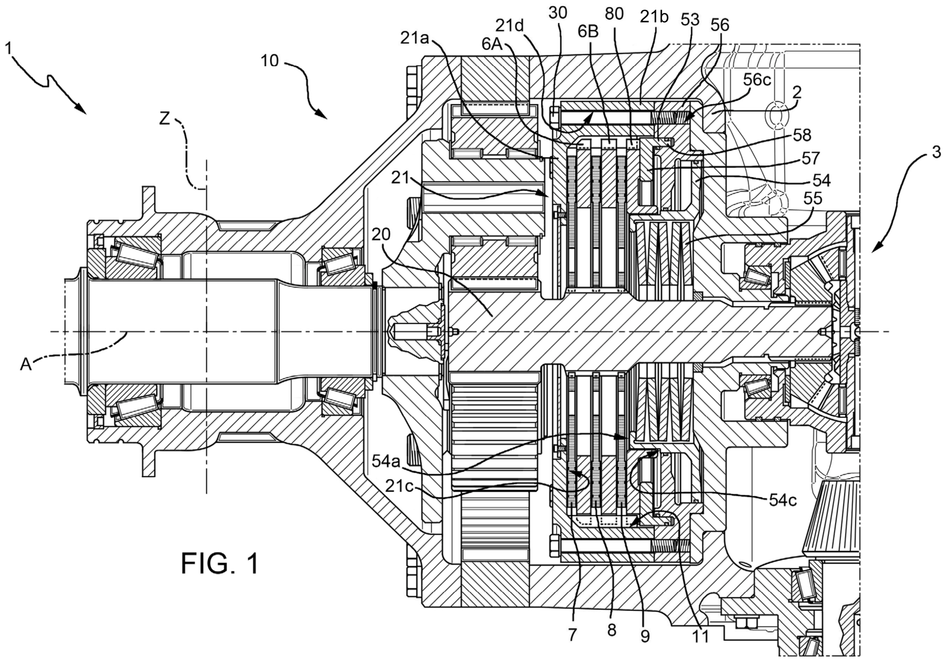

With reference to Figure 1, numeral 1 indicates a work vehicle, which is only partially sketched, in particular an agricultural vehicle such as a tractor. Vehicle 1 comprises a main body 2 and a plurality of not-shown wheels, which are rotatable about respective rotational axes A so as to move main body 2 with respect to the ground.

Work vehicle 1 comprises two front wheels and two rear wheels according to a longitudinal advancement direction of vehicle 1. In detail, the two rear wheels are mounted on a respective axle 20 of work vehicle 1, are rotatable about coincident rotational axes A and are spaced from each other along the rotational axes A. In further detail, vehicle 1 comprises two braking assemblies 10, which are adapted to brake a respective rear wheel.

It is further possible to define a direction Z, which is orthogonal to rotational axis A. Direction Z is vertical to the ground on which the wheels rest during operation.

For the sake of simplicity, in the following of the present description reference will be made to a single braking assembly 10 adapted to brake one of the two rear wheels, the description of a braking assembly 10 adapted to brake the other rear wheel being identical.

As illustrated in Figure 1, braking assembly 10 comprises three brake discs 7, 8 and 9, which are rotatable integrally with the rear wheel about rotational axis A and spaced from each other parallel to rotational axis A. Brake discs 7, 8 and 9 comprise a friction material at the respective external surfaces.

Brake discs 7, 8 and 9 are arranged coaxially to each other and to rotational axis A. In addition, preferably, brake discs 7, 8 and 9 are identical to each other.

In the embodiment shown, proceeding along rotational axis A, brake discs 7, 8, 9 are arranged in succession to one another. In detail, brake disc 7 is arranged on the side of the wheel that is braked by brake assembly 10; brake disc 9 is arranged on the side of a differential 3 of work vehicle 1.

Brake assembly 10 further comprises two intermediate discs 6A, 6B which are rotationally fixed (i.e., not rotatable with respect to main body 2) and respectively interposed between brake discs 7 and 8 and brake discs 8 and 9 parallel to rotational axis A. More specifically, intermediate discs 6A, 6B are arranged coaxially to rotational axis A. In addition, each intermediate disc 6A e 6B is shaped like an annulus.

Preferably, braking assembly 10 also comprises at least one not-shown anti-rotational device of intermediate discs 6A, 6B, which is adapted to prevent the rotation of intermediate discs 6A, 6B about rotational axis A relative to main body 2. In detail, each anti-rotational device comprises a pin, which is fixed to both one of the intermediate discs 6A, 6B and main body 2. By way of example, braking assembly 10 comprises three anti-rotational devices of intermediate disc 6A, which are spaced from one another by 120° circumferentially with respect to rotational axis A; similarly, braking assembly 10 comprises three anti-rotational devices of intermediate disc 6B, which are spaced from one another by 120° circumferentially with respect to rotational axis A.

Brake discs 7, 8, 9 and intermediate discs 6A, 6B are slidable parallel to rotational axis A with respect to main body 2. Braking assembly 10 further comprises a reaction support 21, which is arranged on the side of brake disc 7 that is opposed to intermediate disc 6A.

Reaction support 21 is fixed with respect to main body 2. Accordingly, reaction support 21 is rotationally fixed and cannot slide parallel to rotational axis A.

In detail, reaction support 21 comprises a portion 21a, which is shaped like an annulus and is arranged coaxially to rotational axis A, and a portion 21b, which protrudes from portion 21a parallel to rotational axis A on the side of brake discs 7, 8, 9. Portion 21b is the radial outermost portion of reaction support 21 with respect to rotational axis A. In other words, reaction support 21 is U-shaped in a plane passing through rotational axis A.

In further detail, portion 21a comprises a surface 21c, which is planar and arranged orthogonally to rotational axis A. Surface 21c is adapted to be selectively abutted by brake disc 7.

Furthermore, as will be described in detail in the following, portion 21b comprises a plurality of holes 21d, which are through and adapted to enable reaction support 21 to be fixed to main body 2. Holes 21d are parallel to rotational axis A (Figure 1).

Braking assembly 10 further comprises a piston 53, which is adapted to press brake disc 9, intermediate disc 6B, brake disc 8, intermediate disc 6A and brake disc 7 against reaction support 21, in order to obtain a braking action of the rear wheel. In particular, piston 53 is a service brake piston.

Piston 53 is arranged on the side of brake disc 9 that is opposed to intermediate disc 6B parallel to rotational axis A, is rotationally fixed and arranged coaxially to rotational axis A and axle 20.

In detail, piston 53 is slidable parallel to rotational axis A and it settable to a first configuration, in which it cooperates with brake disc 9 (so as to cause a braking action of the wheel) or to a second configuration, in which it does not cooperate with brake disc 9 (so as not to cause any braking action of the wheel).

Preferably, braking assembly 10 also comprises at least one anti-rotational device (not shown) of piston 53, which is adapted to prevent the rotation of piston 53 about rotational axis A relative to main body 2.

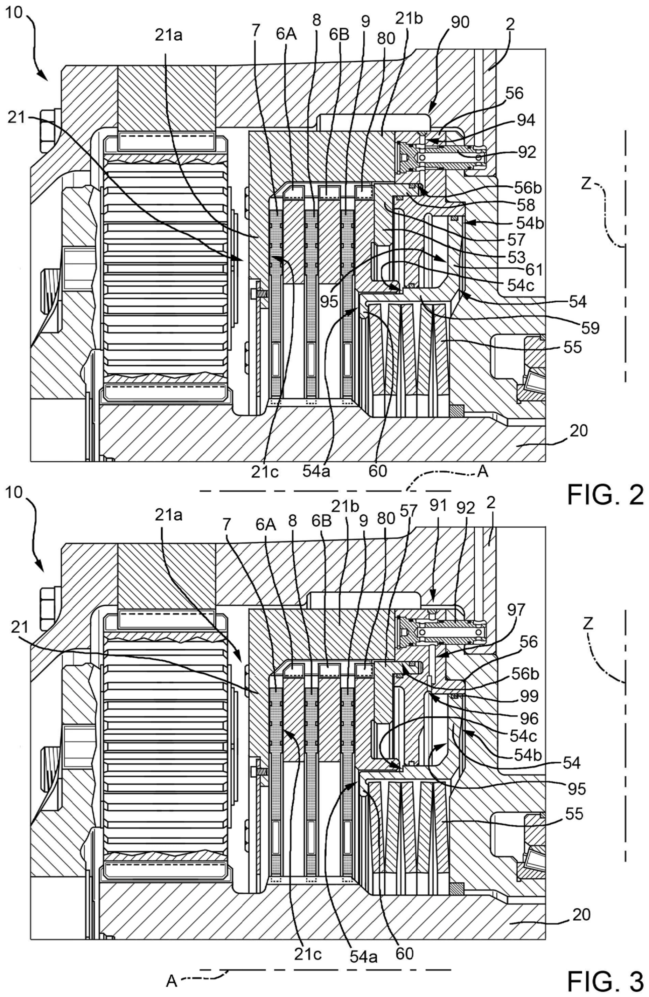

Work vehicle 1 comprises a hydraulic system 90 for the actuation of piston 53, which will be described in detail below (Figure 2). Piston 53 may be actuated by a driver of vehicle 1. In detail, piston 53 is actuated by a brake command oil pressure, which is generated with a master cylinder pump or a hydraulic valve or any other alternative hydraulic oil pressure source inside a vehicle cabin, for example by means of a pedal.

In detail, piston 53 comprises an annular shaped body 57 and a protrusion 58 extending from annular shaped body 57 parallel to rotational axis A. Protrusion 58 extends from annular shaped body 57 on the side opposed to brake disc 9 and preferably over the entire circumference of annular shaped body 57 (Figure 1).

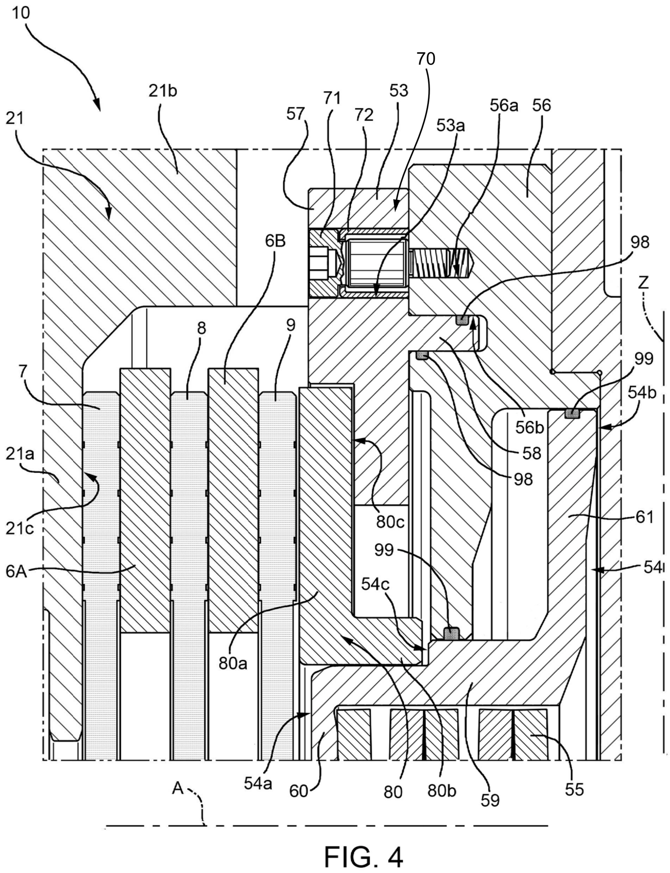

Furthermore, piston 53 comprises three holes 53a, one of which is shown in Figure 4. Holes 53a are through holes. In detail, holes 53a are cylindrical holes directed parallel to rotational axis A. In the embodiment shown, holes 53a are spaced from one another by 120° circumferentially with respect to rotational axis A.

The extension of piston 53 is greater than the extension of brake disc 9 radially with respect to rotational axis A. In addition, holes 53a are arranged at a portion of piston 53 that is radially external to brake disc 9 (Figure 4).

Braking assembly 10 comprises a further brake piston 54, which is adapted to at least indirectly cooperate with brake disc 9 and a spring 55, which is adapted to elastically preload piston 54 to cooperate with brake disc 9.

Piston 54 is rotationally fixed with respect to rotational axis A, but it is slidable parallel to rotational axis A. In detail, braking assembly 10 comprises at least one not-shown anti-rotational device of piston 54, which is adapted to prevent the rotation of piston 54 about rotational axis A relative to main body 2.

Piston 54 is actuated independently of piston 53. In detail, work vehicle 1 comprises a hydraulic system 91 for the actuation of piston 54, which will be described in detail below (Figure 3). Hydraulic system 91 is adapted to counteract the spring force exerted on piston 54 by spring 55 in order to release brake disc 9. Accordingly, piston 54, spring 55 and hydraulic system 91 define a SAHR brake of work vehicle 1.

The release of piston 54 is commanded by the driver, by way of example inside the vehicle cabin with an operating means, such as a lever.

As shown in Figures 1 to 4, piston 54 is arranged on the side of brake disc 9 opposed to brake discs 7 and 8 and is arranged at least partially radially internally to piston 53 radially with respect to rotational axis A.

Spring 55 is arranged on the side of brake piston 54 opposed to brake disc 9 along rotational axis A. In the embodiment shown, spring 55 is a Belleville spring.

Braking assembly 10 further comprises a support element 56, which is fixed to main body 2 and is adapted to slidably support brake piston 53 with respect to main body 2. In detail, support element 56 is arranged on the side of brake piston 53 opposed to brake disc 9.

Support element 56 comprises three holes 56a (one of which is shown in Figure 4), which are each aligned to a respective hole 53a parallel to rotational axis A. In detail, holes 56a are cylindrical holes directed parallel to rotational axis A and at least partially threaded. In further detail, holes 56a are blind holes. In addition, in the embodiment shown, holes 56a are spaced from one another by 120° circumferentially with respect to rotational axis A.

Holes 56a are arranged radially externally to brake discs 7, 8, 9 with respect to rotational axis A (Figure 4).

In addition, support element 56 comprises a seat 56b, which is adapted to be slidably engaged by piston 53 as it moves between the first configuration and the second configuration. In detail, seat 56b is adapted to be engaged by protrusion 58. In further detail, seat 56b extends parallel to rotational axis A (Figures 2 to 4). In the embodiment shown, seat 56b is radially closer to rotational axis A than holes 56a. Nevertheless, seat 56b is arranged radially externally to brake discs 7, 8, 9 with respect to rotational axis A.

Support element 56 further comprises a plurality of holes 56c, which are parallel to rotational axis A and each aligned to a respective hole 21d. In detail, holes 56c are at least partially threaded. In further detail, holes 56c are radially more distant from rotational axis A than holes 56a and seat 56b (Figure 1).

Braking assembly 10 also comprises a plurality of threaded connection means (e.g., a screw or a bolt) 30, which are each adapted to simultaneously engage a respective hole 21d and a respective hole 56c, so as to fix reaction support 21 to main body 2 (Figure 1).

Braking assembly 10 also comprises an intermediate plate 80, which is adapted to directly (i.e., without the interposition of further elements) contact brake disc 9. Intermediate plate 80 is interposed between brake disc 9 and piston 53 and/or piston 54 along rotational axis A.

Piston 53 is adapted to cooperate with brake disc 9 through intermediate plate 80 and piston 54 is adapted to cooperate with brake disc 9 through intermediate plate 80.

Preferably, piston 53 is adapted to directly contact intermediate plate 80; nevertheless, one or more elements might be interposed between piston 53 and intermediate plate 80.

Intermediate plate 80 is rotationally fixed with respect to rotational axis A, but it is slidable parallel to rotational axis A. In detail, braking assembly 10 comprises at least one not-shown anti-rotational device of intermediate plate 80, which is adapted to prevent the rotation of intermediate plate 80 about rotational axis A relative to main body 2.

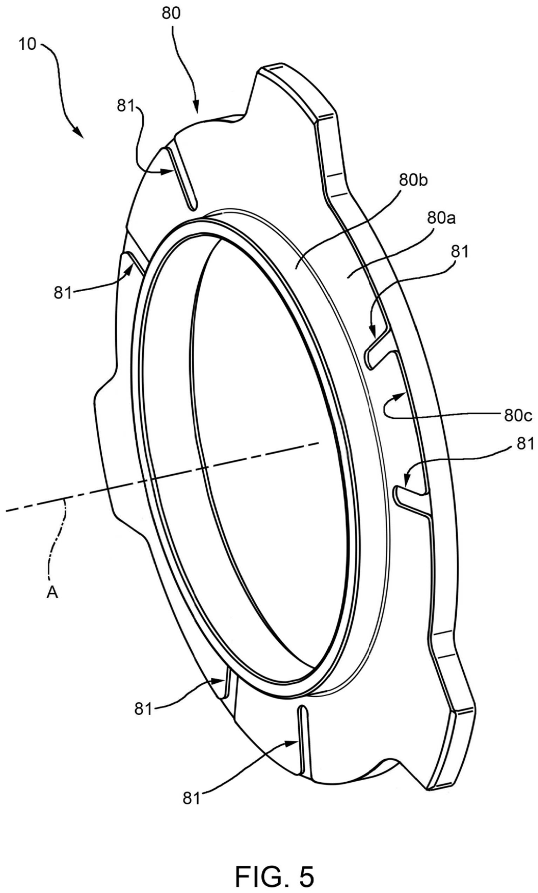

In detail, intermediate plate 80 comprises a first portion 80a, which is an annulus and is arranged coaxially to rotational axis A, and a portion 80b, which protrudes from portion 80a parallel to rotational axis A away from brake discs 7, 8, 9. Portion 80b is the radial innermost portion of intermediate plate 80 with respect to rotational axis A (Figures 4 and 5).

In further detail, portion 80a comprises a surface 80c which is planar and arranged orthogonally to rotational axis A. Surface 80c is arranged on the side of portion 80a that is opposed to brake disc 9 and is adapted to be selectively abutted by piston 53.

Advantageously, spring 55 is arranged at least in part radially internally relative to brake piston 54 with respect to rotational axis A. In detail, spring 55 is closer to rotational axis A than brake piston 54 radially with respect to rotational axis A. In other words, the distance between spring 55 and rotational axis A is smaller than the distance between brake piston 54 and rotational axis A.

As shown in Figures 1 to 4, brake piston 54 comprises a first end 54a, a second end 54b, which are opposed to each other along rotational axis A, and a surface 54c, which is transversal to rotational axis A and interposed between the first end 54a and the second end 54b along rotational axis A.

In addition, brake piston 54 comprises (Figure 4):
- an annular shaped body 59, which is arranged concentrically to rotational axis A;
- a protrusion 60, which extends from annular shaped body 59 radially towards rotational axis A; and
- a protrusion 61, which extends from annular shaped body 59 radially away from rotational axis A.

In detail, protrusion 60 is arranged at first end 54a and protrusion 61 is arranged at second end 54b.

Brake piston 54 is adapted to cooperate with spring 55 at protrusion 60. In detail, brake piston 54 is adapted to cooperate with spring 55 at protrusion 60 on a side of protrusion 60 facing away from brake disc 9. In further detail, protrusion 60 is arranged orthogonally to rotational axis A and spring 55 abuts protrusion 60. In other words, the radially innermost surface of annular shaped portion 59 and protrusion 60 define a seat for spring 55.

Preferably, the extension of protrusion 60 radially with respect to annular shaped body 59 is smaller or much smaller compared to the distance of annular shaped body 59 radially from rotational axis A. By way of example, the extension of protrusion 60 radially with respect to annular shaped body 59 is equal to or smaller than 1/10 of the distance of annular shaped body 59 radially from rotational axis A (Figures 2 and 3).

Surface 54c is arranged at annular shaped body 59 and on the radial outer surface of piston 54. In addition, surface 54c is planar and arranged orthogonally to rotational axis A. Preferably, surface 54c is arranged at a median portion of annular shaped body 59 along rotational axis A.

In particular, piston 54 is configured to cooperate in contact with intermediate plate 80 at surface 54c.

Braking assembly 10 further comprises three clearance recovery devices 70 (one of which is shown in Figure 4), which are adapted to limit the stroke of brake piston 53 from the second configuration to the first configuration parallel to rotational axis A. In detail, clearance recovery devices 70 are adapted to limit the stroke of brake piston 53 specifically when brake discs 7, 8 and/or 9 are worn.

In the following of the present description, only one clearance recovery device 70 will be described, as all clearance recovery devices 70 are identical to one another.

Clearance recovery device 70 comprises (Figure 4):
- a pin 71, which is integral with support element 56 and slidably engaged in a hole 53a; and
- elastic means 72, which are adapted to cooperate with both pin 71 and hole 53a.

In detail, pin 71 is in part engaged in a respective hole 53a and in part engaged in the hole 56a aligned with the respective hole 53a.

In addition, elastic means 72 comprise an elastic bushing, which is arranged within hole 53a. In further detail, each elastic bushing is arranged in the room radially interposed between pin 71 and the surface of hole 53a and is in contact with the surface of hole 53a. More specifically, the surface of hole 53a exerts a frictional force on the elastic bushing.

In further detail, proceeding parallel to rotational axis A from the axial end of pin 71 that is engaged into hole 53a towards the axial end of pin 71 that is engaged into hole 56a, pin 71 comprises:
- a first longitudinal stretch, which is not threaded and engages hole 53a and which is adapted to abut elastic means 72 under at least some operational conditions of clearance recovery device 70;
- a second longitudinal stretch, the extension of the cross-section of which is smaller than the extension of the cross-section of the first longitudinal stretch in a plane perpendicular to rotational axis A; and
- a third longitudinal stretch, which is threaded and engages hole 56a.

Preferably, the second longitudinal stretch is adapted to abut a surface of support element 56 facing piston 53. Alternatively or in addition, a portion of pin 71 and of the elastic bushing may extend in part outside of both holes 56a and 53a.

Elastic means 72 are adapted to cooperate with both support element 56 and pin 71. In detail, the elastic bushing of elastic means 72 is adapted to abut the surface of support element 56 facing piston 53 and/or the first longitudinal stretch under at least some operational condition of clearance recovery device 70.

In detail, between the elastic bushing of elastic means 72 and the inner surface of hole 53a there is a friction coefficient that allows the elastic bushing to slide relative to hole 53a only when the axial force applied to piston 53 is higher than the friction force acting between the elastic bushing and the inner surface of hole 53a. In addition, hydraulic system 90 is adapted to exert forces on piston 53 that are greater when piston 53 is to be moved from the second configuration to the first configuration than when piston 53 is to be moved from the first configuration to the second configuration.

When the braking action is commanded, piston 53 is moved toward the first configuration and the elastic bushing tends to slide relative to hole 53a toward brake disc 9 and integrally with pin 71.

When the braking action is stopped again, piston 53 is moved toward the second configuration and the elastic bushing tends to remain stationary with respect to hole 53a (i.e., it tends not to slide with respect to hole 53a). As a result, the first longitudinal stretch of pin 71 abuts the elastic bushing and the movement of piston 53 away from brake disc 8 is stopped.

This is especially advantageous when the surfaces of brake discs 7, 8, 9 are worn. In fact, in such a situation the stroke of piston 53 from the second configuration to the first configuration would become gradually larger to compensate for the wear of brake discs 7, 8, 9. However, since the elastic bushing tends to remain offset toward brake disc 9 at the end of each activation of piston 53, and since the travel of piston 53 away from brake disc 9 is stopped by the elastic bushing, piston 53 in the second configuration does not return to the axial position it would have reached when the surfaces of brake discs 7, 8, 9, were new and unworn, but remains offset towards brake disc 9. This ensures that the stroke of piston 53 between the second configuration and the first configuration remains the same or essentially the same over time even when the brake disc surfaces 7, 8 and 9 are worn.

The fact that the elastic bushing slides with respect to hole 53a when piston 53 moves toward brake disc 9 and does not slide with respect to hole 53a when piston 53 moves away from brake disc 9 is due to the forces with which piston 53 is moved with respect to brake disc 9. In detail, when piston 53 moves toward brake disc 9 the forces involved are greater than those acting on piston 53 when it moves away from brake disc 9. In more detail, when piston 53 moves toward brake disc 9 the forces acting on piston 53 are greater than the (maximum) frictional forces acting between the elastic bushing and the inner surfaces of hole 53a. In contrast, when piston 53 moves away from brake disc 9 the forces acting on piston 53 are lower than the frictional forces acting between the elastic bushing and the inner surfaces of hole 53a.

In view of the positioning of holes 53a and 56a, clearance recovery device 70 as a whole is arranged radially externally to brake disc 9 with respect to rotational axis A.

Figure 2 shows hydraulic systems 90 in part and how hydraulic fluid is fed in to actuate piston 53. In detail, hydraulic system 90 comprises a plurality of ducts 94 for the hydraulic fluid, which are at least partially integrated into main body 2 and support element 56. In further detail, ducts 94 fluidically connect a source of the hydraulic fluid to seat 56b.

Figure 3 shows hydraulic systems 91 in part and how hydraulic fluid is fed in to actuate piston 54.

Furthermore, piston 54 and support element 56 define a cavity 95, which is adapted to receive the hydraulic fluid for the actuation of piston 54 and hydraulic system 91 comprises an opening 96 at cavity 95.

In further detail, hydraulic system 91 comprises a plurality of ducts 97 for the hydraulic fluid and comprising opening 96. In the embodiment shown, ducts 97 are at least partially integrated into main body 2 and support element 56.

Braking assembly 10 further comprises a valve 92, which is adapted to control the passage of the hydraulic fluid along ducts 94 and/or 97.

By way of example, hydraulic system 91 is arranged as in patent application EP3760503 in the name of the same Applicant.

Furthermore, braking assembly 10 comprises sealing means 98, which are adapted to prevent the hydraulic fluid released from seat 56b. In detail, sealing means 98 are interposed between piston 53 and support element 56 (Figure 4).

Braking assembly 10 also comprises sealing means 99, which are adapted to seal cavity 95 and to prevent the hydraulic fluid released from opening 96 from undesirably escaping from cavity 95. In detail, sealing means 99 are interposed between piston 54 and support element 56.

Braking assembly 10 preferably comprises an oil sump 11, which is adapted to collect a lubricating fluid fallen by gravity after it has lubricated intermediate discs 6A, 6B and/or brake discs 7, 8, 9. In addition, intermediate discs 6A, 6B and brake discs 7, 8, 9 are partially immersed in the lubricating fluid collected by the sump (Figure 1).

Furthermore, as shown in Figure 5, intermediate plate 80 comprises of grooves 81, which are arranged radially with respect to rotational axis A and are adapted to guide the lubricant fluid. In detail, the grooves 81 are arranged at portion 80a and are spaced from one another angularly with respect to rotational axis A. In further detail, the grooves 81 are arranged at portion 80a on the same side of portion 80b.

In the embodiment shown, grooves 81 extend from the radially external profile of portion 80a. In addition, grooves 81 have a rectangular or substantially rectangular shape both in a plane orthogonal to rotational axis A and in a plane parallel to rotational axis A.

The operation of the braking assembly 10 described above is the following.

In use, elastic means 55 constantly exert the spring force on piston 54, which is biased towards disc brake 9 and hydraulic system 91 counteracts the spring force by means of the hydraulic fluid into cavity 95. In detail, the hydraulic fluid flows through ducts 97, passes through opening 96 and causes piston 54 to move away from support element 56. In further detail, piston 54 slides with respect to support element 56 in a direction opposite to brake disc 9 (i.e., towards the right according to the arrangement shown in Figure 3) .

When the driver of work vehicle 1 commands a braking action by means of the pedal, piston 53 is actuated by hydraulic system 90 and pushes brake discs 7, 8, 9 and intermediate discs 6A, 6B against reaction support 21. In detail, the hydraulic fluid flows through ducts 94, reaches seat 56b and causes piston 53 to move towards brake disc 9 (i.e., towards the left according to the arrangement shown in Figure 2). At the same time, the stroke of piston 53 between the first configuration and the second configuration is limited by clearance recovery device 70.

When the driver commands the SAHR brake to exert its braking action, the hydraulic system 91 ceases to fully counteract the action of elastic means 55, thus allowing piston 54 to slide toward intermediate plate 80. Piston 54 then pushes against intermediate plate 80, which in turn pushes brake discs 7, 8, 9 and intermediate discs 6A, 6B against reaction support 21. In detail, surface 54c is pushed against portion 80b.

Furthermore, since brake discs 7, 8, 9 are partially immersed in the fluid collected in the lowermost part of cavity, such fluid is splashed over brake discs 7, 8, 9 as a result of the rotation thereof about rotational axis A.

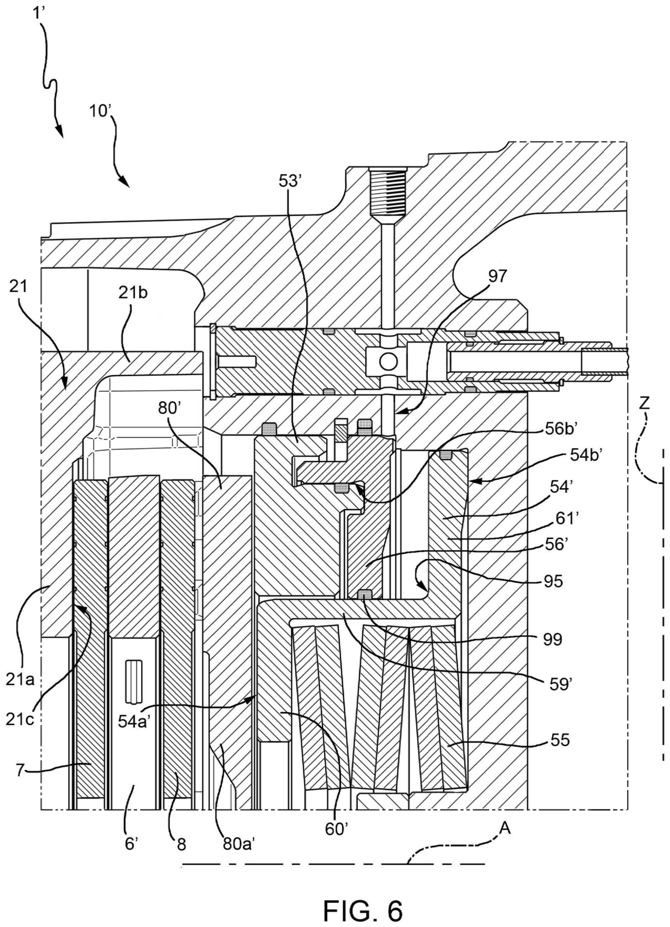

With reference to Figure 6, 1' denotes a work vehicle comprising a braking assembly 10' according to a second embodiment of the present invention. Work vehicle 1' and braking assembly 10' are respectively similar to work vehicle 1 and braking assembly 10 and will be described hereinafter only insofar as they differ from the latter; equal or equivalent parts of work vehicles 1; 1' and braking assemblies 10; 10' and will be marked, where possible, by the same reference numerals.

Work vehicle 1' differs from work vehicle 1 in that it comprises braking assembly 10' instead of braking assembly 10. Braking assembly 10' differs from braking assembly 10 in that it comprises only two brake discs 7, 8 and only one intermediate disc 6', which is interposed between brake discs 7 and 8 parallel to rotational axis A.

In addition, piston 54' does not comprise surface 54c and intermediate plate 80' does not comprise portion 80b. As a result, piston 54' is adapted to cooperate with intermediate plate 80' at first end 54a'.

Furthermore, preferably but not necessarily, the radially outermost surface of support element 56' is aligned to the radially outermost surface of piston 53' radially with respect to rotational axis A.

The operation of braking assembly 10' is similar to the operation of braking assembly 10. Therefore, the description thereof is omitted for the sake of conciseness.

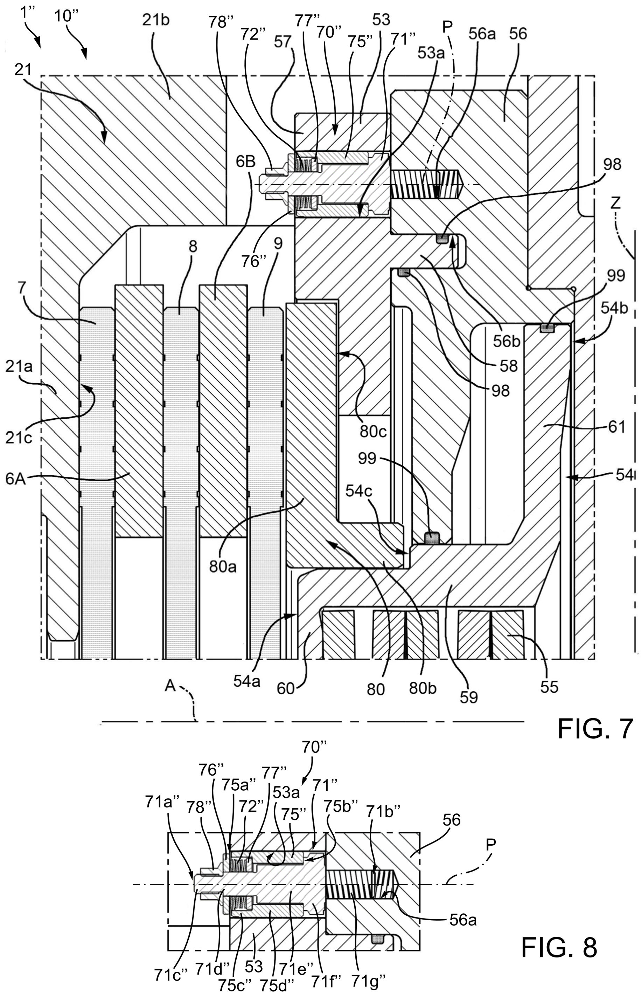

With reference to Figures 7 and 8, 1" denotes a work vehicle comprising a braking assembly 10" according to a third embodiment of the present invention. Work vehicle 1" and braking assembly 10'' are respectively similar to work vehicle 1 and braking assembly 10 and will be described hereinafter only insofar as they differ from the latter; equal or equivalent parts of work vehicles 1; 1'' and braking assemblies 10; 10" and will be marked, where possible, by the same reference numerals.

Work vehicle 1'' differs from work vehicle 1 in that it comprises braking assembly 10'' instead of braking assembly 10. Braking assembly 10" differs from braking assembly 10 in that it comprises three clearance recovery devices 70" instead of clearance recovery devices 70.

In the following of the present description, only one clearance recovery device 70'' will be described, as all clearance recovery devices 70'' are identical to one another.

Clearance recovery device 70'' comprises:
- a pin 71", which is integral with support element 56 and slidably engaged in a hole 53a;
- a bushing 75", which is engaged by pin 71" and arranged within hole 53a; and
- elastic means 72", which are adapted to cooperate with both pin 71" and bushing 75".

In detail, pin 71'' is in part engaged in a respective hole 53a and in part engaged in the hole 56a aligned with the respective hole 53a.

Bushing 75'' is arranged in the room radially interposed between pin 71" and the surface of hole 53a and is in contact with the surface of hole 53a. More specifically, the surface of hole 53a exerts a frictional force on bushing 75". Elastic means 72'' are adapted to exert an elastic force onto bushing 75'' that biases bushing 75'' toward support element 56. In detail, the elastic force is directed parallel to the longitudinal axis P of pin 71". In further detail, elastic means 72'' comprise a spring fitted around pin 71". Preferably, elastic means 72" comprise a plurality of stacked Belleville springs.

Bushing 75'' is adapted to slide relative to hole 53a when the axial force applied to piston 53 by hydraulic system 90 is higher than the sum of the friction force acting between bushing 75'' and the inner surface of hole 53a and the elastic force exerted by elastic means 72".

Clearance recovery device 70'' further comprises:
- two washers 76", 77", which are engaged by pin 71" and are adapted to cooperate with respective opposite ends of elastic means 72" parallel to longitudinal axis P;
- a nut 78", which is engaged by pin 71" and is adapted to limit the movement of one of the two washers 76", 77" parallel to longitudinal axis P.

In detail, washer 76'' is adapted to abut against nut 78'' on its side that faces away from washer 77'' parallel to longitudinal axis P. Therefore, nut 78'' prevents washer 76'' from sliding away from washer 77'' parallel to longitudinal axis P.

As shown in Figure 8, pin 71" is cylindrical and comprises two opposite ends 71a", 71b" along longitudinal axis P. End 71a'' is free, while end 71b'' is arranged inside hole 56a. Proceeding from end 71a'' to end 71b" along longitudinal axis P, pin 71" comprises:
- a stretch 71c", which is threaded and arranged on the side of piston 53 facing away from support element 56 along longitudinal axis P;
- a stretch 71d" , which is arranged partly on the side of piston 53 facing away from support element 56 along longitudinal axis P and partly inside hole 53a; the diameter of stretch 71d" is greater than the diameter of stretch 71c";
- a stretch 71e", which is entirely contained within hole 53a and has a diameter greater than the diameter of stretch 71d";
- a stretch 71f", which is also entirely contained within hole 53a and has a diameter greater than the diameter of stretch 71e"; stretch 71f'' abuts against support element 56; and
- a stretch 71g", which is threaded and engaged in hole 56a.

In detail, nut 78'' is arranged at stretch 71c''; washers 76" and 77" and elastic means 72" are arranged at stretch 71d''; bushing 75" is arranged at stretches 71d" and 71e" and abuts against stretch 71f" on the side thereof that faces away from stretch 71g" under at least some operational conditions.

In greater detail, bushing 75'' is a tubular body comprising two opposite ends 75a", 75b" along longitudinal axis P. End 75a'' faces towards washer 76'' and end 75b" faces towards stretch 71f''.

Proceeding from end 75a'' to end 75b" parallel to longitudinal axis P, bushing 75'' comprises a stretch 75c" and a stretch 75d'', which has a smaller radially inner diameter than stretch 75c". More specifically, washer 77" abuts against stretch 75d''. Therefore, stretch 75d" limits the sliding of washer 77'' away from washer 76'' parallel to longitudinal axis P.

The operation of braking assembly 10" is similar to the operation of braking assembly 10 and will be described in the following only insofar as it differs therefrom.

When the braking action is commanded, piston 53 is moved toward the first configuration and bushing 75'' tends to slide integrally with piston 53 toward brake disc 9 and relative to pin 71". This causes elastic means 72'' to be compressed. In detail, as bushing 75'' slides toward brake disc 9, washer 77" is also moved towards washer 76'' by stretch 75d". When the braking action is stopped again, piston 53 moves toward the second configuration and bushing 75'' moves integrally with piston 53. In particular, elastic means 72'' elongate and push bushing 75'' towards support element 56.

However, when the surfaces of brake discs 7, 8, 9 are worn, the stroke of piston 53 from the second configuration to the first configuration would become gradually larger to compensate for the wear of brake discs 7, 8, 9. In such a situation, when the braking action is commanded, piston 53 is moved toward the first configuration and bushing 75" still tends to slide integrally with piston 53 toward brake disc 9 and relative to pin 71" until washer 76'' abuts end 75a". At that point, if the pressure exerted on piston 53 by hydraulic system 90 is such that the friction existing between the 75'' bushing and hole 53a is overcome, relative motion is established between bushing 75'' and hole 53a. In particular, piston 53 moves closer to brake discs 7, 8 and 9, recovering play due to wear, while bushing 75'' stays closer to the support element 56.

Still considering the situation in which the surfaces of brake discs 7, 8, 9 are worn, when the braking action is stopped again and piston 53 moves back towards support element 56, there is no relative motion between piston 53 and bushing 75", because the forces exerted by hydraulic system 90 on piston 53 when it moves away from brake disc 9
are smaller than those acting on piston 53 when it moves toward brake disc 9. As a result, piston 53 moves back towards support element 56 integrally with bushing 75", which abuts against stretch 71f''. Therefore, piston 53 remains offset towards the brake discs 7, 8, 9.

In view of the foregoing, the advantages of braking assembly 10; 10'; 10" and work vehicle 1; 1'; 1'' according to the invention are apparent.

In particular, since braking assembly 10; 10'; 10" comprises both service brake piston 53; 53' and SAHR brake piston 54; 54' and that both pistons 53; 53' and 54; 54' are adapted to independently cooperate with brake disc 9, the volume occupied by components used for vehicle braking is significantly reduced. Such a solution is significantly more compact than the known solutions discussed in the introductory part of the present description and provides greater design freedom for the vehicle. In detail, the space gained from the rearrangement of the SAHR brake and service brake can be advantageously used to mount additional components on board and/or to implement additional working features (i.e., automatic brake steering).

The claimed arrangement of the service brake piston 53; 53' and the SAHR brake piston 54; 54' can limit the costs associated with the whole rear/front axle.

Since elastic means 55 is arranged radially internally relative to brake piston 54; 54', it is possible to reduce the costs associated with the braking assembly 10; 10'. In fact, the claimed arrangement allows the use of elastic means 55 with a limited radial extension, which are more readily available on the market and therefore less expensive than elastic means 55 of larger diameter.

Since intermediate plate 80; 80' comprises grooves 81, the lubricant fluid may be guided efficiently radially with respect to rotational axis A.

Since SAHR brake piston 54; 54' is disengaged while work vehicle 1; 1' is travelling, the clearance between SAHR brake piston 54; 54' and intermediate plate 80; 80' guarantees higher safety factor in terms of risks of unwanted drag force preventing power losses too.

Since the extension of piston 53; 53' is greater than the extension of brake disc 9 radially with respect to rotational axis A, a lower hydraulic pressure is required to actuate piston 53; 53' than in an arrangement in which the extension of piston 53; 53' is equal to or smaller than the extension of brake disc 9 radially with respect to rotational axis A.

Moreover, since the braking assembly 10; 10'; 10" comprises clearance recovery device 70; 70", the clearance inevitably caused by wear can be advantageously and automatically recovered and repeatability of use of braking assembly 10; 10'; 10" is ensured. In detail, since clearance recovery device 70; 70'' is arranged at support element 56, in the event that the clearance recovery device 70; 70" surfaces are worn or damaged, the clearance recovery device 70; 70" can be easily restored by replacing support element 56, without requiring replacement or rework of complex parts of braking assembly 10; 10'; 10'' such as main body 2.

Since clearance recovery device 70'' comprises elastic means 72'' and bushing 75", which are different elements from each other, the elastic force acting on bushing 75'' and thus the ability of the braking assembly to recover clearance can be precisely adjusted.

Since clearance recovery device 70'' comprises washers 76", 77", which are arranged at respective opposite ends of elastic means 72", it is possible to further adjust the preload of elastic means 72''. In fact, the preload may be changed simply by replacing at least one of the washers 76", 77" with a washer having a different axial extension.

It is clear that modifications can be made to the described braking assembly 10; 10'; 10" and work vehicle 1; 1'; 1" which do not extend beyond the scope of protection defined by the claims.

Work vehicle 1; 1'; 1" might be a crawled work vehicle comprising tracks. In that case, the one or more wheels of work vehicle 1; 1'; 1'' adapted to be braked by braking assembly 10; 10'; 10" would be one or more sprockets of the chain assembly of the work vehicle 1; 1'; 1".

In particular, work vehicle 1; 1'; 1" might comprise only one braking assembly 10; 10'; 10".

Work vehicle 1; 1'; 1" might comprise one or more braking assemblies 10; 10'; 10" adapted to brake one or both front wheels.

Braking assembly 10; 10" might comprise only one brake disc 7, 8, 9, only two brake discs 7, 8, 9 or more than three brake discs 7, 8, 9. Braking assembly 10' might comprise only one brake disc 7, 8 or more than two brake discs 7, 8.

Piston 53; 53' and/or piston 54; 54' may be adapted to cooperate with brake disc 7.

Braking assembly 10; 10'; 10" might comprise only one clearance recovery devices 70; 70" , two clearance recovery devices 70; 70'' or more than three clearance recovery devices 70; 70".

Clearance recovery device 70'' might not comprise washers 76'' and 77''. In particular, elastic means 72'' could be directly compressed between nut 78" and bushing 75'' parallel to longitudinal axis P.

Disc 6A, 6B; 6' might comprise a friction material at an external surface thereof and discs 7, 8 and 9 might not comprise the friction material.

Piston 53 might comprise a number of holes 53a other than three. In detail, piston 53 might comprise less than three holes 53a (i.e., one or two) or more than three holes 53a. In addition, holes 53a might be variously arranged.

Elastic means 72 might comprise a coil spring instead of or in addition to the elastic bushing. Spring 55 might be a helical spring, in particular having a rectangular cross-section.

## Claims

1. Braking assembly (10; 10'; 10") for a work vehicle (1; 1'; 1") comprising:
- a first brake disc (9; 8), which is adapted to rotate, in use, integrally with at least one wheel of said work vehicle (1; 1'; 1") about a rotational axis (A);
- a first brake piston (53; 53') and a second brake piston (54; 54'), which are both adapted to at least indirectly cooperate with said first brake disc (9; 8); and
- first elastic means (55), which are adapted to elastically urge said second brake piston (54; 54') to cooperate with said first brake disc (9; 8);
wherein said first elastic means (55) is arranged radially internally relative to said second brake piston (54; 54') with respect to said rotational axis (A).

2. Braking assembly according to claim 1, wherein said first elastic means (55) is closer to said rotational axis (A) than said second brake piston (54; 54') radially with respect to said rotational axis (A).

3. Braking assembly according to claim 1 or 2, further comprising:
- a second brake disc (7), which is adapted to rotate, in use, integrally with said wheel of said work vehicle (1; 1'; 1") about said rotational axis (A); said second brake disc (7) being spaced from said first brake disc (9; 8) parallel to said rotational axis (A);
- an intermediate disc (6A, 6B; 6'), which is rotationally fixed relative to a main body (2) of said work vehicle (1; 1'; 1") and which is interposed between said first brake disc (9; 8) and said second brake disc (7) parallel to said rotational axis (A).

4. Braking assembly according to claim 3, further comprising an intermediate plate (80; 80'), which is slidable relative to said main body (2);
said intermediate plate (80; 80') being interposed between said first brake disc (9; 8) and said first brake piston (53; 53') and/or between said first brake disc (9; 8) said second brake piston (54; 54') along said rotational axis (A) ;
said first brake piston (53; 53') and said second brake piston (54) being adapted to cooperate with said first brake disc (9; 8) through said intermediate plate (80; 80').

5. Braking assembly according to claim 4, wherein said intermediate plate (80; 80') comprises a plurality of grooves (81), which are arranged radially with respect to said rotational axis (A) and are adapted to guide a lubricant fluid.

6. Braking assembly according to claim 4 or 5, wherein said second brake piston (54) comprises:
- a first end (54a), which is adapted to cooperate with said first elastic means (55);
- a second end (54b), which is opposed to said first end (54a) along said rotational axis (A);
- a surface (54c), which is transversal to said rotational axis (A) and interposed between said first end (54a) and said second end (54b) along said rotational axis (A) ;
said second brake piston (54) being configured to cooperate in contact with said intermediate plate (80) at said surface (54c).

7. Braking assembly according to claim 6, wherein said surface (54c) is arranged radially externally to said first elastic means (55) with respect to said rotational axis (A).

8. Braking assembly according to any one of the foregoing claims, wherein the extension of said first brake piston (53; 53') is greater than the extension of said first brake disc (9; 8) radially with respect to said rotational axis (A).

9. Braking assembly according to any one of the foregoing claims, further comprising a support element (56), which is fixed to a main body (2) of said work vehicle (1; 1'; 1"); said support element (56) being adapted to slidably support said first brake piston (53) and/or said second brake piston (54);
said braking assembly (10; 10'; 10") further comprising a clearance recovery device (70; 70"), which is adapted cooperate with said support element (56) and to limit the movement of said first brake piston (53; 53') with respect to said first brake disc (9; 8) along said rotational axis (A);
said clearance recovery device (70; 70") comprising:
- an element (71; 71"), which is connected to said support element (56) and slidable with respect to said first brake piston (53; 53'); and
- second elastic means (72; 72"), which are adapted to cooperate with said element (71; 71") and/or said first brake piston (53; 53').

10. Braking assembly according to claim 9, wherein said first brake piston (53; 53') comprises at least one first hole (53a);
said element (71) comprising a pin (71), which is slidably engaged in a respective said first hole (53a); said second elastic means (72) comprising an elastic bushing (72), which is arranged in part within said first hole (53a) radially between said pin (71) and the surface of said first hole (53a); said elastic bushing (72) being in contact with said surface of said first hole (53a) and being adapted to abut said pin (71) under at least some operational condition of said clearance recovery device (70).

11. Braking assembly according to claim 9, wherein said first brake piston (53; 53') comprises at least one first hole (53a); said element (71'') comprising a pin (71"), which is slidably engaged in a respective said first hole (53a);
said clearance recovery device (70") further comprising a bushing (75"), which fitted around said pin (71") and arranged within said first hole (53a); said bushing (75") being in contact with said surface of said first hole (53a) and being adapted to abut said pin (71") under at least some operational condition of said clearance recovery device (70");
said second elastic means (72'') being adapted to exert an elastic force onto said bushing (75") that biases said bushing (75") towards said support element (56).

12. Braking assembly according to claim 11, wherein clearance recovery device (70'') defines a longitudinal axis (P) and further comprises:
- a nut (78"), which is screwed to said pin (71");
- at least one washer (76'', 77''), which is adapted to cooperate with said nut (78") and said second elastic means (72") to limit the movement of said second elastic means (72") parallel to said longitudinal axis (P).

13. Braking assembly according to any one of claims 10 to 12, wherein said support element (56) comprises at least one second hole (56a), which is threaded and aligned to a respective first hole (53a); said pin (71; 71") being screwed to said second hole (56a).

14. Braking assembly according to any one of claims 9 to 13, wherein said clearance recovery device (70; 70") is arranged radially externally to said first brake disc (9; 8) with respect to said rotational axis (A).

15. A work vehicle (1; 1'; 1'') comprising:
- a main body (2);
- a plurality of wheels, which are adapted to move, in use, said main body (2) with respect to the ground; and
- at least one braking assembly (10; 10'; 10") according to any one of the foregoing claims, which is adapted to brake, in use, one or more of said plurality of wheels.
